# EUROPEAN PATENT APPLICATION

(11) **EP 4 586 633 A1**
(43) Date of publication of application: **16.07.2025**
(21) Application number: 23862939.8
(22) Date of filing: 23.08.2023
(51) Int. Cl.: H04N 25/70, H04N 25/10, H04N 25/705, H04N 25/773

(54) **PHOTOELECTRIC CONVERSION DEVICE**

(30) Priority: 08.09.2022 JP 2022142845
(71) Applicant: CANON KABUSHIKI KAISHA, Tokyo 146-8501 (JP)
(72) Inventor: TSUBOI Toshiki, Tokyo 146-8501 (JP); MORIMOTO Kazuhiro, Tokyo 146-8501 (JP)
(74) Representative: TBK
(86) International application number: PCT/JP2023/030359
(87) International publication number: WO 2024/053400

(57) **Abstract**

A photoelectric conversion device includes a plurality of photoelectric conversion elements, an acquisition unit configured to acquire a micro-frame constituted by a one-bit signal based on light incident on each of the plurality of photoelectric conversion elements, and a combining unit configured to combine a plurality of the micro-frames to generate a sub-frame constituted by a multi-bit signal, in which the plurality of photoelectric conversion elements includes a first photoelectric conversion element and a second photoelectric conversion element, and in which during a period in which one micro-frame is acquired, a first exposure period in which the one-bit signal is generated based on the light incident on the first photoelectric conversion element is different from a second exposure period in which the one-bit signal is generated based on the light incident on the second photoelectric conversion element.

## Description

### [Technical Field]

The present invention relates to a photoelectric conversion device.

### [Background Art]

Patent Literature 1 discloses a ranging device that measures a distance to an object by emitting light from a light source and receiving light including reflected light from the object by a light receiving element. In the ranging device of Patent Literature 1, a single photon avalanche diode (SPAD) element that multiplies an electron generated by photoelectric conversion to acquire a signal is used as the light receiving element. Patent Literature 1 discloses a technique in which measurement is repeatedly performed while changing a gating period in which a photon is detected in the SPAD element.

### [Citation List]

### [Patent Literature]

PTL 1: U.S. Patent Application Publication No. 2017/0052065

### [Summary of Invention]

### [Technical Problem]

In the ranging technique disclosed in Patent Literature 1, there is a trade-off relationship between distance resolution and frame rate. However, in order to improve the ranging performance, it may be required to ensure an appropriate distance resolution and improve a frame rate.

An object of the present invention is to provide a photoelectric conversion device having an improved frame rate while ensuring an appropriate distance resolution.

### [Solution to Problem]

According to one disclosure of the present specification, there is provided a photoelectric conversion device including a plurality of photoelectric conversion elements, an acquisition unit configured to acquire a micro-frame constituted by a one-bit signal based on light incident on each of the plurality of photoelectric conversion elements, and a combining unit configured to combine a plurality of the micro-frames to generate a sub-frame constituted by a multi-bit signal. The plurality of photoelectric conversion elements include a first photoelectric conversion element and a second photoelectric conversion element. During a period in which one micro-frame is acquired, a first exposure period in which the one-bit signal is generated based on the light incident on the first photoelectric conversion element is different from a second exposure period in which the one-bit signal is generated based on the light incident on the second photoelectric conversion element.

### [Advantageous Effects of Invention]

According to the present invention, there is provided a photoelectric conversion device having an improved frame rate while ensuring an appropriate distance resolution.

### [Brief Description of Drawings]

[FIG. 1]

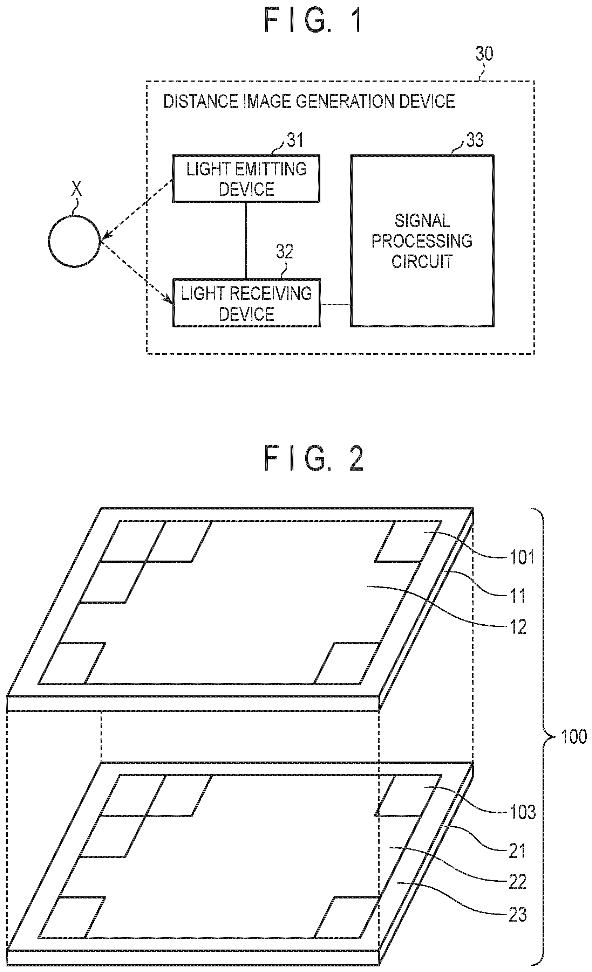

   FIG. 1 is a hardware block diagram illustrating a schematic configuration example of a ranging device according to a first embodiment.
[FIG. 2]
   FIG. 2 is a schematic diagram illustrating an overall configuration of a photoelectric conversion device according to the first embodiment.
[FIG. 3]

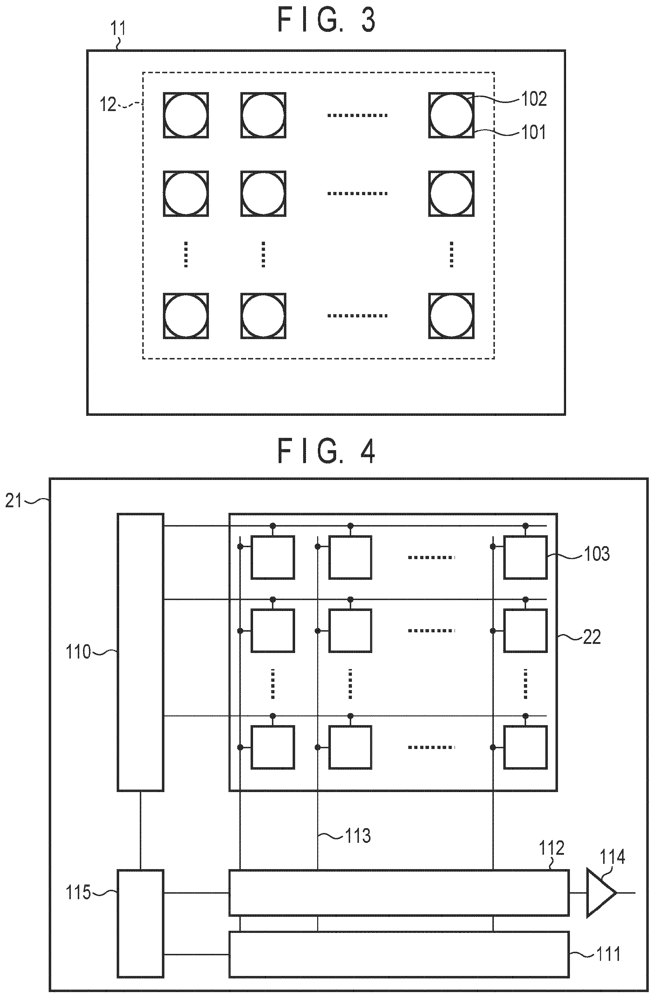

   FIG. 3 is a schematic block diagram illustrating a configuration example of a sensor substrate according to the first embodiment.
[FIG. 4]
   FIG. 4 is a schematic block diagram illustrating a configuration example of a circuit substrate according to the first embodiment.
[FIG. 5]

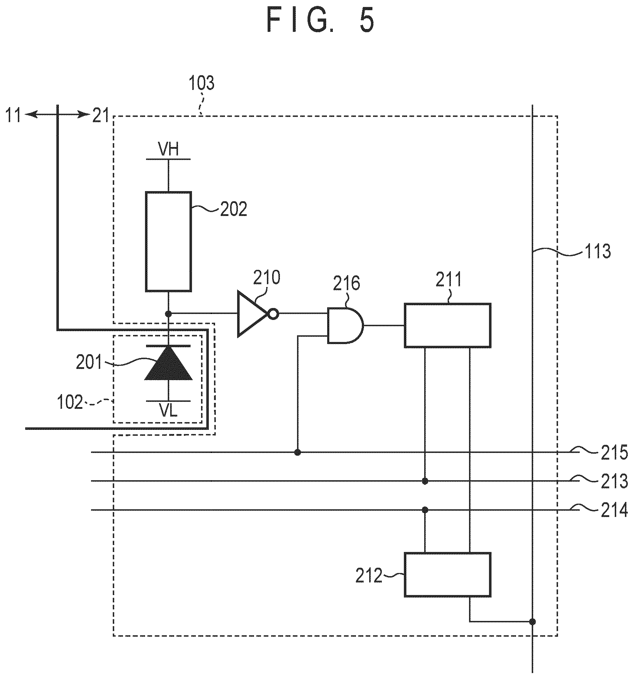

   FIG. 5 is a schematic block diagram illustrating a configuration example for one pixel of a photoelectric conversion unit and a pixel signal processing unit according to the first embodiment.
[FIG. 6A]

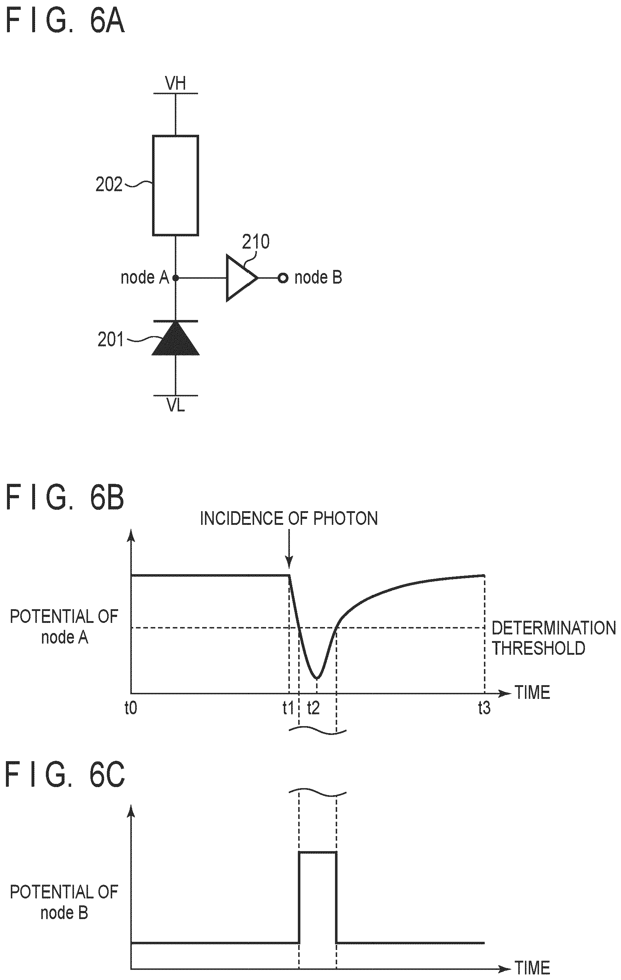

   FIG. 6A is a diagram for explaining an operation of an avalanche photodiode according to the first embodiment.
[FIG. 6B]
   FIG. 6B is a diagram for explaining the operation of the avalanche photodiode according to the first embodiment.
[FIG. 6C]
   FIG. 6C is a diagram for explaining the operation of the avalanche photodiode according to the first embodiment.
[FIG. 7]

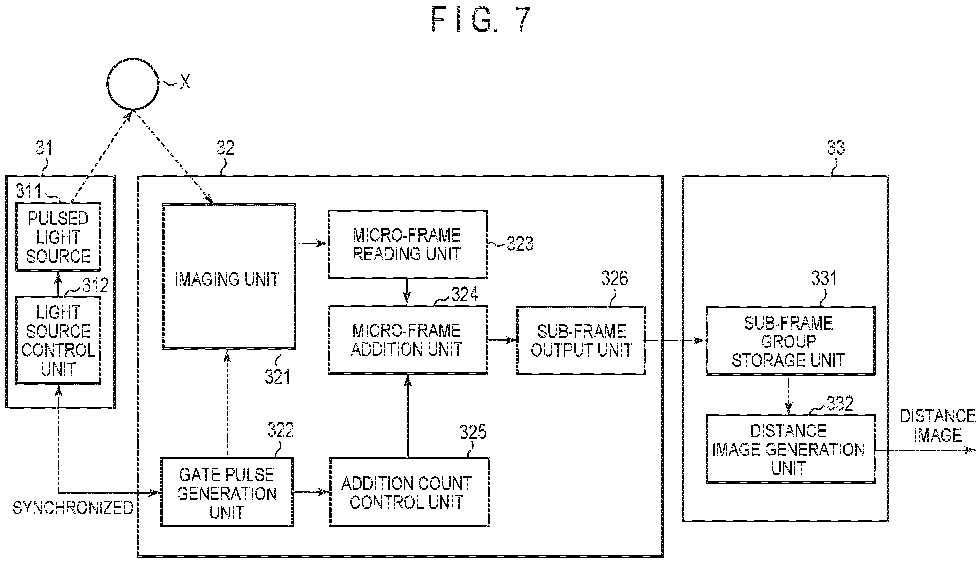

   FIG. 7 is a functional block diagram illustrating a schematic configuration example of the ranging device according to the first embodiment.
[FIG. 8]

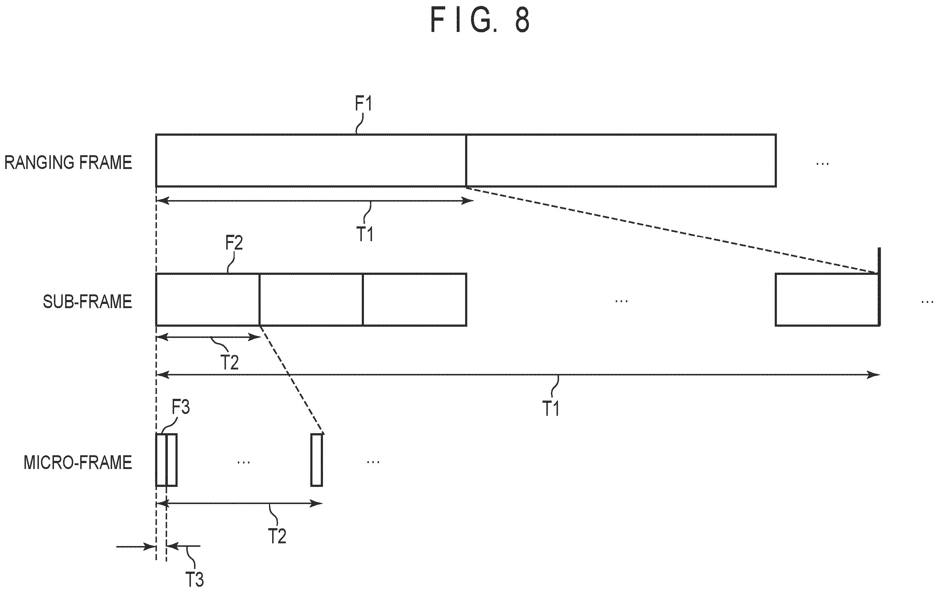

   FIG. 8 is a schematic diagram for explaining a ranging frame, a sub-frame, and a micro-frame according to the first embodiment.
[FIG. 9]

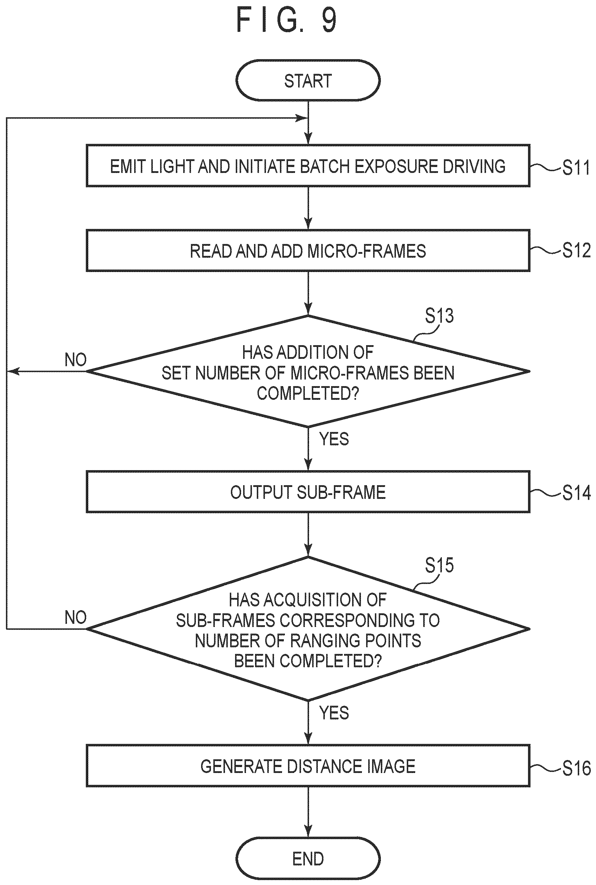

   FIG. 9 is a flowchart illustrating an operation of a distance image generation device in one ranging frame period according to the first embodiment.
[FIG. 10A]

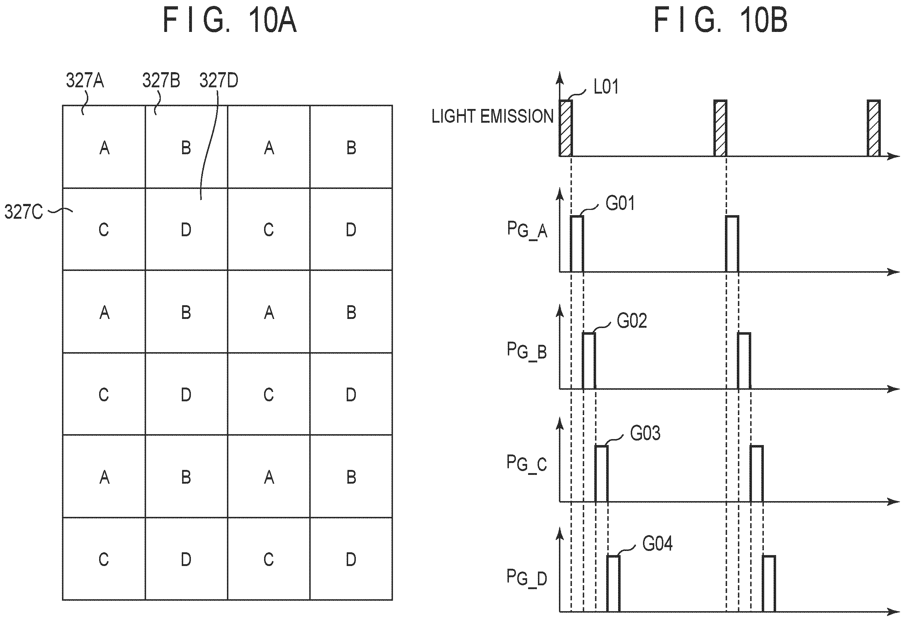

   FIG. 10A is a schematic diagram of a pixel array according to the first embodiment.
[FIG. 10B]
   FIG. 10B is a driving timing diagram according to the first embodiment.
[FIG. 11A]

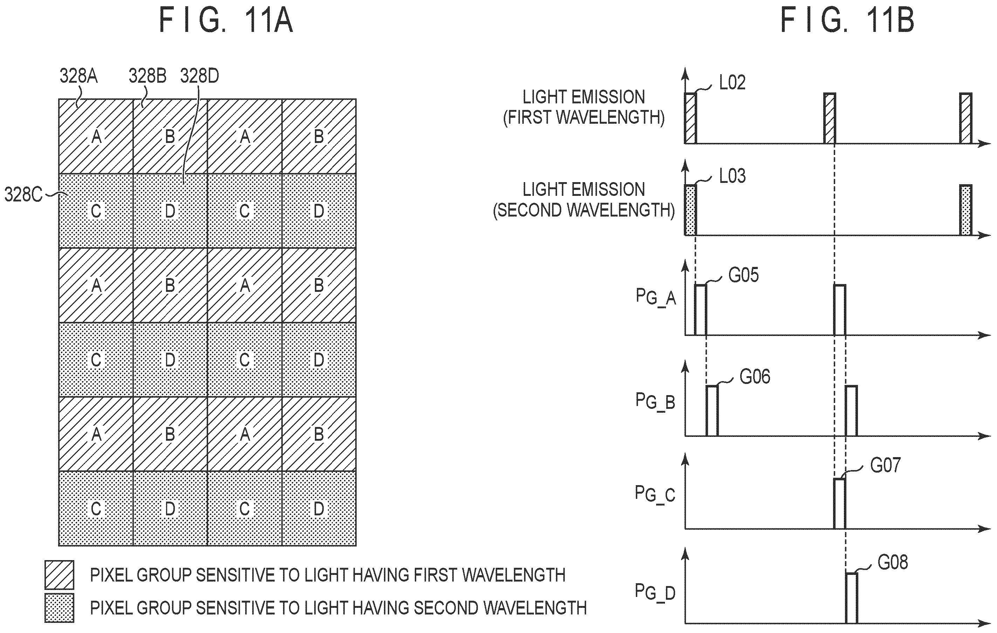

   FIG. 11A is a schematic diagram of a pixel array according to a second embodiment.
[FIG. 11B]
   FIG. 11B is a driving timing diagram according to the second embodiment.
[FIG. 12A]

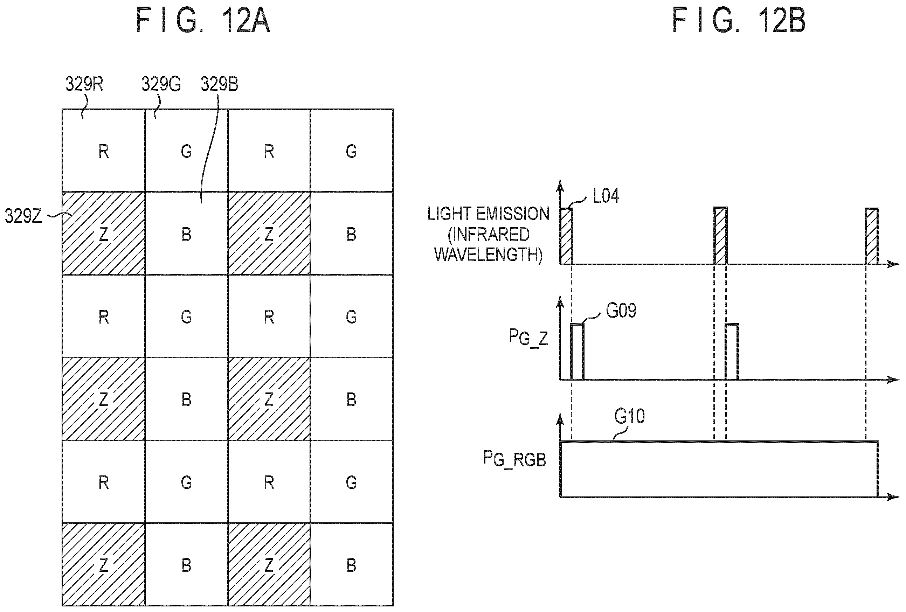

   FIG. 12A is a schematic diagram of a pixel array according to a third embodiment.
[FIG. 12B]
   FIG. 12B is a driving timing diagram according to the third embodiment.
[FIG. 13]

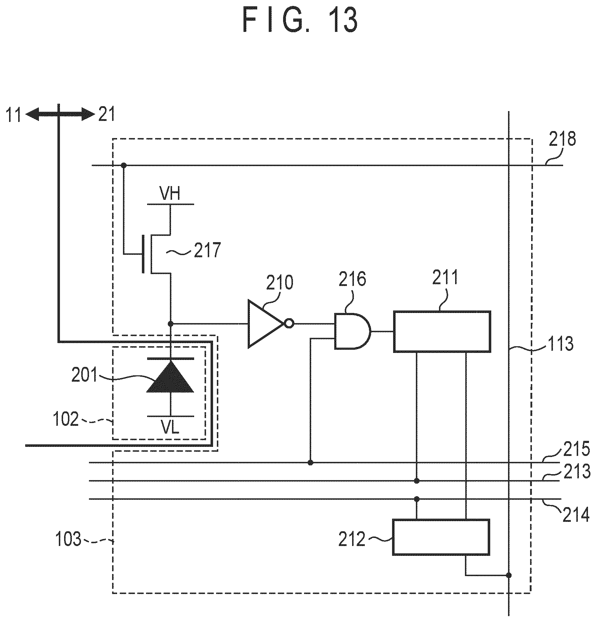

   FIG. 13 is a schematic block diagram of a pixel according to a fourth embodiment.
[FIG. 14]

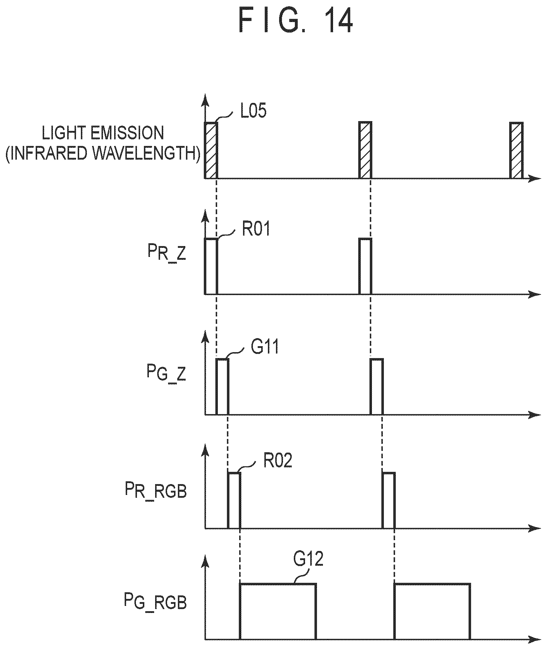

   FIG. 14 is a driving timing diagram according to the fourth embodiment.
[FIG. 15]

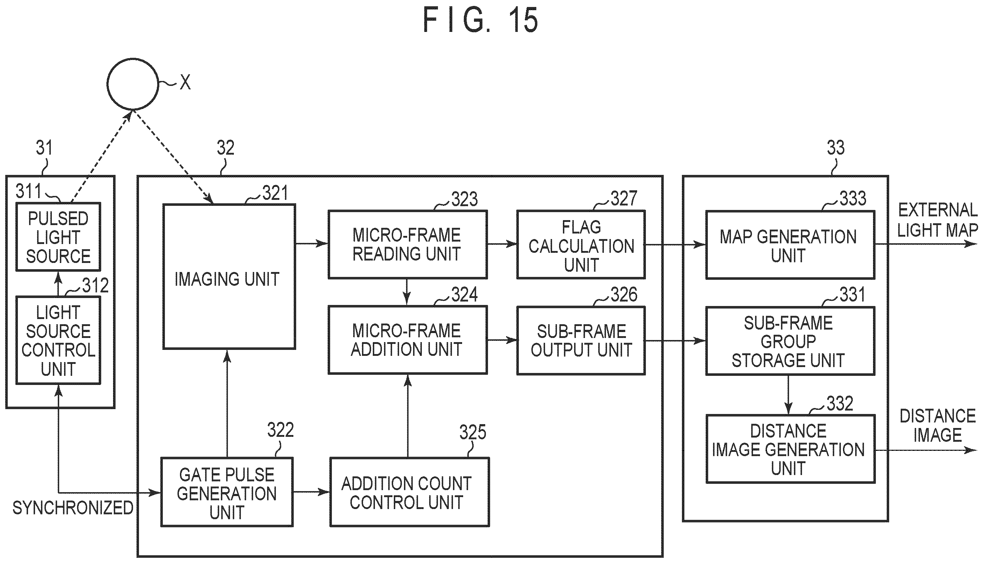

   FIG. 15 is a functional block diagram illustrating a schematic configuration example of a ranging device according to a fifth embodiment.
[FIG. 16]

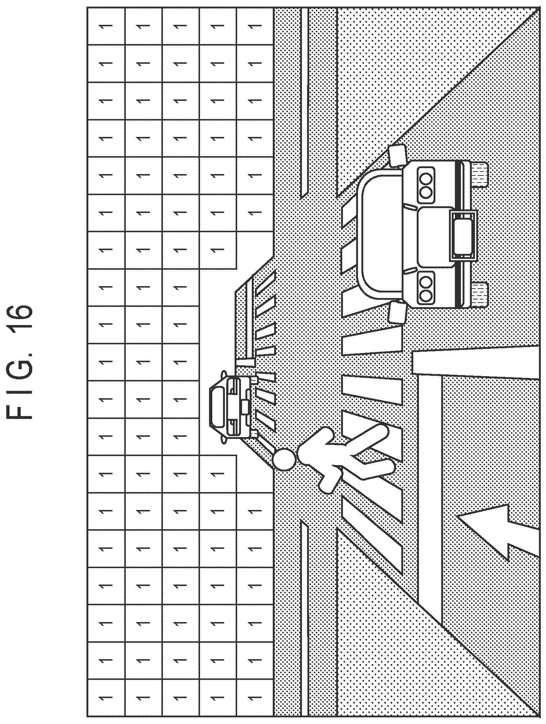

   FIG. 16 is a schematic diagram illustrating an example of an external light map according to the fifth embodiment.
[FIG. 17A]

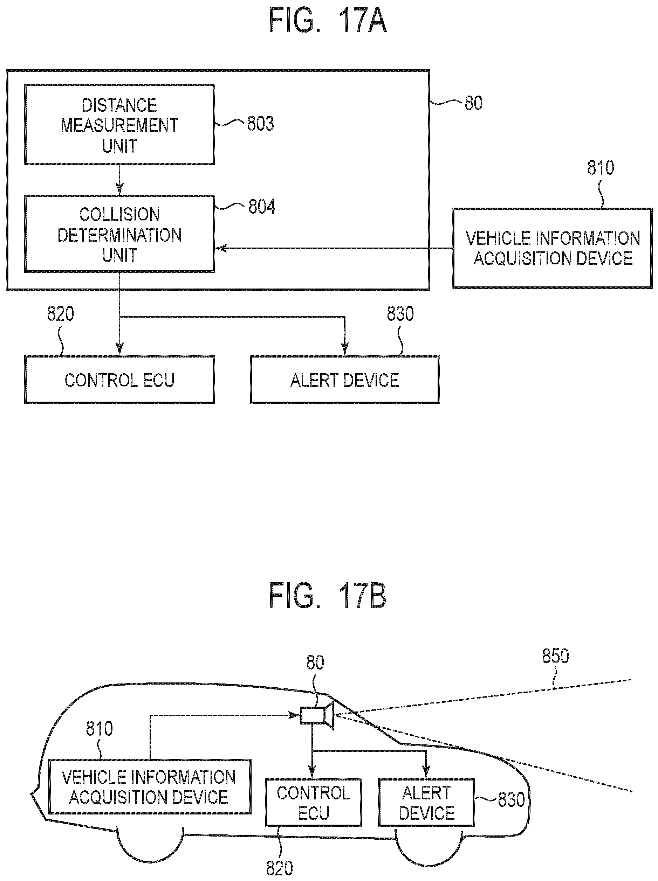

   FIG. 17A is a schematic diagram of equipment according to a sixth embodiment.
[FIG. 17B]
   FIG. 17B is a schematic diagram of equipment according to the sixth embodiment.

### [Description of Embodiments]

Hereinafter, embodiments of the present invention will be described with reference to the drawings. Identical elements or corresponding elements across multiple drawings are denoted by common reference signs, and the description thereof may be omitted or simplified.

### [First Embodiment]

FIG. 1 is a hardware block diagram illustrating a schematic configuration example of a distance image generation device 30 according to the present embodiment. The distance image generation device 30 includes a light emitting device 31, a light receiving device 32, and a signal processing circuit 33. Note that the configuration of the distance image generation device 30 illustrated in the present embodiment is an example, and is not limited to the illustrated configuration.

The distance image generation device 30 is a device that measures a distance to a ranging object X using a technology such as light detection and ranging (LiDAR). The distance image generation device 30 measures a distance from the distance image generation device 30 to the object X based on a time difference until light emitted from the light emitting device 31 is reflected by the object X and received by the light receiving device 32. In addition, the distance image generation device 30 emits laser light to a predetermined ranging area including the object X and receives reflected light by a pixel array, so that distances can be two-dimensionally measured at a plurality of points. As a result, the distance image generation device 30 can generate and output a distance image.

The light received by the light receiving device 32 includes ambient light such as sunlight in addition to the reflected light from the object X. Therefore, the distance image generation device 30 performs ranging in which the influence of ambient light is reduced by measuring incident light in each of a plurality of periods (bin periods), and determining that reflected light is incident during a period when the amount of light is at the peak.

The light emitting device 31 is a device that emits light such as laser light to the outside of the distance image generation device 30. The signal processing circuit 33 may include a processor that performs arithmetic processing on a digital signal, a memory that stores the digital signal, and the like. The memory may be, for example, a semiconductor memory.

The light receiving device 32 generates a pulse signal including a pulse based on the incident light. The light receiving device 32 is, for example, a photoelectric conversion device including an avalanche photodiode as a photoelectric conversion element. In this case, when one photon is incident on the avalanche photodiode and a charge is generated, one pulse is generated by avalanche multiplication. However, the light receiving device 32 may use, for example, a photoelectric conversion element using another photodiode.

In the present embodiment, the light receiving device 32 includes a pixel array in which a plurality of photoelectric conversion elements (pixels) are arranged to form a plurality of rows and a plurality of columns. Here, the photoelectric conversion device, which is a specific configuration example of the light receiving device 32, will be described with reference to FIGS. 2 to 6C. The configuration example of the photoelectric conversion device to be described below is an example. The photoelectric conversion device applicable to the light receiving device 32 is not limited thereto, and any photoelectric conversion device may be used as long as the function of FIG. 7 to be described below can be realized.

FIG. 2 is a schematic diagram illustrating an overall configuration of a photoelectric conversion device 100 according to the present embodiment. The photoelectric conversion device 100 includes a sensor substrate 11 (first substrate) and a circuit substrate 21 (second substrate) stacked on each other. The sensor substrate 11 and the circuit substrate 21 are electrically connected to each other. The sensor substrate 11 has a pixel region 12 in which a plurality of pixels 101 are arranged to form a plurality of rows and a plurality of columns. The circuit substrate 21 includes a first circuit region 22 in which a plurality of pixel signal processing units 103 are arranged to form a plurality of rows and a plurality of columns, and a second circuit region 23 arranged on an outer periphery of the first circuit region 22. The second circuit region 23 may include a circuit or the like that controls the plurality of pixel signal processing units 103. The sensor substrate 11 has a light incident surface that receives incident light and a connection surface facing the light incident surface. The sensor substrate 11 is connected to the circuit substrate 21 on the connection surface side. That is, the photoelectric conversion device 100 is of a so-called back-illuminated type.

In the present specification, a "plan view" refers to a view from a direction perpendicular to a surface opposite to the light incident surface. In addition, the cross section refers to a surface in a direction perpendicular to a surface on a side opposite to the light incident surface of the sensor substrate 11. Note that the light incident surface may be a rough surface in a microscopic view, but in this case, the plan view is defined based on the light incident surface in a macroscopic view.

Hereinafter, the sensor substrate 11 and the circuit substrate 21 will be described as diced chips, but the sensor substrate 11 and the circuit substrate 21 are not limited to the chips. For example, the sensor substrate 11 and the circuit substrate 21 may be wafers. Furthermore, in a case where the sensor substrate 11 and the circuit substrate 21 are diced chips, the photoelectric conversion device 100 may be manufactured by stacking the sensor substrate 11 and the circuit substrate 21 in a wafer state and then dicing the stack, or may be manufactured by dicing the sensor substrate 11 and the circuit substrate 21 and then stacking the diced sensor substrate 11 and the diced circuit substrate 21.

FIG. 3 is a schematic block diagram illustrating an arrangement example of the sensor substrate 11. In the pixel region 12, a plurality of pixels 101 are arranged to form a plurality of rows and a plurality of columns. Each of the plurality of pixels 101 includes a photoelectric conversion unit 102 including an avalanche photodiode (hereinafter referred to as APD) as a photoelectric conversion element in the substrate.

A conductivity type of a charge used as a signal charge among charge pairs generated in the APD is referred to as a first conductivity type. The first conductivity type refers to a conductivity type in which a charge having the same polarity as the signal charge is a majority carrier. In addition, a conductivity type opposite to the first conductivity type, that is, a conductivity type in which a charge having a polarity different from that of the signal charge is a majority carrier is referred to as a second conductivity type. In the APD to be described below, an anode of the APD has a fixed potential, and a signal is extracted from a cathode of the APD. Therefore, the semiconductor region of first conductivity type is an N-type semiconductor region, and the semiconductor region of the second conductivity type is a P-type semiconductor region. Note that the cathode of the APD may have a fixed potential, and a signal may be extracted from the anode of the APD. In this case, the semiconductor region of the first conductivity type is a P-type semiconductor region, and the semiconductor region of the second conductivity type is an N-type semiconductor region. In addition, a case where one node of the APD has a fixed potential will be described below, but the potentials of both nodes of the APD may vary.

FIG. 4 is a schematic block diagram illustrating a configuration example of the circuit substrate 21. The circuit substrate 21 includes a first circuit region 22 in which a plurality of pixel signal processing units 103 are arranged to form a plurality of rows and a plurality of columns.

In addition, a vertical scanning circuit 110, a horizontal scanning circuit 111, a readout circuit 112, a pixel output signal line 113, an output circuit 114, and a control signal generation unit 115 are arranged on the circuit substrate 21. The plurality of photoelectric conversion units 102 illustrated in FIG. 3 and the plurality of pixel signal processing units 103 illustrated in FIG. 4 are electrically connected via connection wirings provided for the respective pixels 101.

The control signal generation unit 115 is a control circuit that generates control signals for driving the vertical scanning circuit 110, the horizontal scanning circuit 111, and the readout circuit 112 and supplies the control signals to the respective units. As a result, the control signal generation unit 115 controls a driving timing or the like for each unit.

The vertical scanning circuit 110 supplies a control signal to each of the plurality of pixel signal processing units 103 based on the control signal supplied from the control signal generation unit 115. The vertical scanning circuit 110 supplies a control signal to each pixel signal processing unit 103 for each row via a driving line provided for each row of the first circuit region 22. As will be described below, a plurality of driving lines may be provided for each row. As the vertical scanning circuit 110, a logic circuit such as a shift register or an address decoder may be used. As a result, the vertical scanning circuit 110 selects a row to which a signal is output from the pixel signal processing unit 103.

The signal output from the photoelectric conversion unit 102 of the pixel 101 is processed by the pixel signal processing unit 103. The pixel signal processing unit 103 counts the number of pulses output from the APD included in the photoelectric conversion unit 102 to acquire and hold a digital signal having a plurality of bits.

It is not required that one pixel signal processing unit 103 be provided for every pixel 101. For example, one pixel signal processing unit 103 may be shared by a plurality of pixels 101. In this case, the pixel signal processing unit 103 sequentially processes signals output from the respective photoelectric conversion units 102, thereby providing a signal processing function to each pixel 101.

The horizontal scanning circuit 111 supplies a control signal to the readout circuit 112 based on the control signal supplied from the control signal generation unit 115. The pixel signal processing unit 103 is connected to the readout circuit 112 via the pixel output signal line 113 provided for each column of the first circuit region 22. The pixel output signal line 113 for one column is shared by the plurality of pixel signal processing units 103 in the corresponding column. The pixel output signal line 113 includes a plurality of wirings, and has at least a function of outputting a digital signal from each pixel signal processing unit 103 to the readout circuit 112 and a function of supplying a control signal for selecting a column from which a signal is to be output to the pixel signal processing unit 103. The readout circuit 112 outputs a signal to a storage unit or a signal processing unit outside the photoelectric conversion device 100 via the output circuit 114 based on the control signal supplied from the control signal generation unit 115.

The photoelectric conversion units 102 in the pixel region 12 may be arranged one-dimensionally. Furthermore, it is not required that one of the functions of the pixel signal processing unit 103 be provided for every pixel 101. For example, one pixel signal processing unit 103 may be shared by a plurality of pixels 101. In this case, the pixel signal processing unit 103 sequentially processes signals output from the respective photoelectric conversion units 102, thereby providing a signal processing function to each pixel 101.

As illustrated in FIGS. 3 and 4, the first circuit region 22 in which the plurality of pixel signal processing units 103 are arranged is arranged in a region overlapping the pixel region 12 in a plan view. Then, the vertical scanning circuit 110, the horizontal scanning circuit 111, the readout circuit 112, the output circuit 114, and the control signal generation unit 115 are arranged to overlap between an edge of the sensor substrate 11 and an edge of the pixel region 12 in a plan view. In other words, the sensor substrate 11 has a pixel region 12 and a non-pixel region arranged around the pixel region 12. In the circuit substrate 21, the second circuit region 23 (described above with reference to FIG. 2) in which the vertical scanning circuit 110, the horizontal scanning circuit 111, the readout circuit 112, the output circuit 114, and the control signal generation unit 115 are arranged is arranged in a region overlapping the non-pixel region in a plan view.

Note that the arrangement of the pixel output signal line 113, the arrangement of the readout circuit 112, and the arrangement of the output circuit 114 are not limited to those illustrated in FIG. 3. For example, the pixel output signal line 113 may be arranged to extend in a row direction, and may be arranged to be shared by the plurality of pixel signal processing units 103 in the corresponding row. Then, the readout circuit 112 may be arranged such that the pixel output signal lines 113 for each row are connected to the readout circuit 112.

FIG. 5 is a schematic block diagram illustrating a configuration example for one pixel of the photoelectric conversion unit 102 and the pixel signal processing unit 103 according to the present embodiment. FIG. 5 schematically illustrates a more specific configuration example including a connection relationship between the photoelectric conversion unit 102 arranged in the sensor substrate 11 and the pixel signal processing unit 103 arranged in the circuit substrate 21. Note that, in FIG. 5, driving lines between the vertical scanning circuit 110 and the pixel signal processing unit 103 in FIG. 4 are illustrated as driving lines 213, 214, and 215.

The photoelectric conversion unit 102 includes an APD 201. The pixel signal processing unit 103 includes a quenching element 202, a waveform shaping unit 210, a counter circuit 211, a selection circuit 212, and a gating circuit 216. Note that the pixel signal processing unit 103 only needs to include at least one of the waveform shaping unit 210, the counter circuit 211, the selection circuit 212, and the gating circuit 216.

The APD 201 generates a charge according to incident light by photoelectric conversion. A voltage VL (first voltage) is supplied to the anode of the APD 201. The cathode of the APD 201 is connected to a first terminal of the quenching element 202 and an input terminal of the waveform shaping unit 210. A voltage VH (second voltage) higher than the voltage VL supplied to the anode is supplied to the cathode of the APD 201. As a result, a reverse bias voltage is supplied to the anode and the cathode of the APD 201 such that the APD 201 performs an avalanche multiplication operation. In the APD 201 to which the reverse bias voltage is supplied, when a charge is generated by incident light, the charge causes avalanche multiplication, and an avalanche current is generated.

The operation modes when the reverse bias voltage is supplied to the APD 201 include a Geiger mode and a linear mode. The Geiger mode is a mode in which the anode and the cathode are operated at a potential difference larger than the breakdown voltage, and the linear mode is a mode in which the anode and the cathode are operated at a potential difference close to or smaller than the breakdown voltage.

The APD operated in the Geiger mode is referred to as a single photon avalanche diode (SPAD). At this time, for example, the voltage VL (first voltage) is -30 V, and the voltage VH (second voltage) is 1 V. The APD 201 may be operated in the linear mode, or may be operated in the Geiger mode. The SPAD is preferable because the SPAD has a larger potential difference than the APD in the linear mode, resulting in a remarkable avalanche multiplication effect.

The quenching element 202 functions as a load circuit (quenching circuit) during signal multiplication by avalanche multiplication. The quenching element 202 suppresses a voltage supplied to the APD 201 to suppress avalanche multiplication (quenching operation). In addition, the quenching element 202 returns the voltage supplied to the APD 201 to the voltage VH (recharging operation) by applying a current corresponding to a voltage drop caused by the quenching operation. The quenching element 202 may be, for example, a resistive element.

The waveform shaping unit 210 shapes a potential change of the cathode of the APD 201 obtained at the time of photon detection, and outputs a pulse signal. As the waveform shaping unit 210, for example, an inverter circuit is used. Although FIG. 5 illustrates an example in which one inverter is used as the waveform shaping unit 210, a circuit in which a plurality of inverters are connected in series may be used as the waveform shaping unit 210, or the waveform shaping unit 210 may be another circuit having a waveform shaping effect.

The gating circuit 216 is a circuit that performs gating such that the pulse signal output from the waveform shaping unit 210 is allowed to pass only for a predetermined period. During a period in which the pulse signal is allowed to pass through the gating circuit 216, photons incident on the APD 201 are counted by the counter circuit 211 at the subsequent stage. Therefore, the gating circuit 216 controls an exposure period during which signal generation based on incident light is performed in the pixel 101. The period during which the pulse signal is allowed to pass is controlled by a control signal supplied from the vertical scanning circuit 110 via the driving line 215. FIG. 5 illustrates an example in which one AND circuit is used as the gating circuit 216. The pulse signal and the control signal are input to two input terminals of the AND circuit. The AND circuit outputs a logical product thereof to the counter circuit 211. Note that the gating circuit 216 only needs to realize gating, and may have a circuit configuration other than the AND circuit. In addition, the waveform shaping unit 210 and the gating circuit 216 may be integrated by using a logic circuit such as a NAND circuit.

The counter circuit 211 counts the pulse signal output from the waveform shaping unit 210 via the gating circuit 216, and holds a digital signal indicating a count value. Furthermore, when a control signal is supplied from the vertical scanning circuit 110 via the driving line 213, the counter circuit 211 resets the held signal.

A control signal is supplied to the selection circuit 212 from the vertical scanning circuit 110 illustrated in FIG. 4 via the driving line 214 illustrated in FIG. 5. In response to this control signal, the selection circuit 212 switches between electrical connection and disconnection between the counter circuit 211 and the pixel output signal line 113. The selection circuit 212 includes, for example, a buffer circuit or the like for outputting a signal corresponding to the value held in the counter circuit 211.

Note that, in the example of FIG. 5, switching between electrical connection and disconnection between the counter circuit 211 and the pixel output signal line 113 is performed in the selection circuit 212, but the method of controlling the signal output to the pixel output signal line 113 is not limited thereto. For example, a switch such as a transistor may be arranged at a node between the quenching element 202 and the APD 201, between the photoelectric conversion unit 102 and the pixel signal processing unit 103, or the like, and the signal output to the pixel output signal line 113 may be controlled by switching between electrical connection and disconnection. Furthermore, the signal output to the pixel output signal line 113 may be controlled by changing the value of the voltage VH or the voltage VL supplied to the photoelectric conversion unit 102 using a switch such as a transistor.

FIGS. 6A, 6B, and 6C are diagrams for explaining the operation of the APD 201 according to the present embodiment. FIG. 6A is a diagram illustrating the APD 201, the quenching element 202, and the waveform shaping unit 210 extracted from FIG. 5. As illustrated in FIG. 6A, a connection node between the APD 201, the quenching element 202, and the input terminal of the waveform shaping unit 210 is node A. In addition, as illustrated in FIG. 6A, the output side of the waveform shaping unit 210 is node B.

FIG. 6B is a graph illustrating a temporal change in potential of node A of FIG. 6A. FIG. 6C is a graph illustrating a temporal change in potential of node B of FIG. 6A. During a period from time t0 to time t1, a voltage of VH-VL is applied to the APD 201 of FIG. 6A. When a photon is incident on the APD 201 at time t1, avalanche multiplication occurs in the APD 201. As a result, an avalanche current flows through the quenching element 202, and the potential of node A drops. Thereafter, the potential drop amount further increases, and the voltage applied to the APD 201 gradually decreases. Then, at time t2, the avalanche multiplication in the APD 201 stops. As a result, the voltage level of node A does not drop below a certain fixed value. Thereafter, during a period from time t2 to time t3, a current compensating for the voltage drop flows from the node of the voltage VH into node A, and node A settles to its original potential at time t3.

In the above-described process, the potential of node B goes to a high level during a period in which the potential of node A is lower than a certain threshold. In this way, the waveform of the potential drop of node A caused by the incidence of the photon is shaped by the waveform shaping unit 210 and output as a pulse to node B.

Next, the overall configuration and operation of the distance image generation device 30 will be described in more detail. FIG. 7 is a functional block diagram illustrating a schematic configuration example of the distance image generation device 30 according to the present embodiment. FIG. 7 illustrates more detailed configurations of the light emitting device 31, the light receiving device 32, and the signal processing circuit 33 described in FIG. 1.

The light emitting device 31 includes a pulsed light source 311 and a light source control unit 312. The pulsed light source 311 is a light source such as a semiconductor laser device that emits pulsed light over the entire ranging area. The pulsed light source 311 may be a surface light source such as a surface emitting laser. The light source control unit 312 is a control circuit that controls a light emission timing of the pulsed light source 311.

The light receiving device 32 includes an imaging unit 321, a gate pulse generation unit 322, a micro-frame reading unit 323, a micro-frame addition unit 324, an addition count control unit 325, and a sub-frame output unit 326. As described above, the imaging unit 321 may be a photoelectric conversion device including a pixel array in which pixel circuits each including the APD 201 are arranged two-dimensionally. As a result, the distance image generation device 30 can acquire a two-dimensional distance image.

The gate pulse generation unit 322 is a control circuit that outputs a control signal for controlling a driving timing of the imaging unit 321. In addition, the gate pulse generation unit 322 controls the pulsed light source 311 and the imaging unit 321 to be synchronized with each other by transmitting and receiving control signals to and from the light source control unit 312. As a result, it is possible to capture an image while controlling a time difference from a time when light is emitted from the pulsed light source 311 to a time when the light is received by the imaging unit 321. In the present embodiment, the gate pulse generation unit 322 drives the imaging unit 321 in a global gate manner. The global gate driving is a driving method in which incident light is simultaneously detected in some pixels (pixel group) in the imaging unit 321 during the same exposure period based on the time when pulsed light is emitted from the pulsed light source 311. In the global gate driving of the present embodiment, incident light is repeatedly detected while sequentially shifting the batch exposure timing. As a result, the pixels of the imaging unit 321 simultaneously generates one-bit signals indicating whether an incident photon is present or absent during each of a plurality of exposure periods.

The global gate driving is realized by inputting a high-level signal to input terminals of the gating circuits 216 of the plurality of pixels 101 during a gating period based on a control signal from the gate pulse generation unit 322. Note that, in a process to be described below, one group of the plurality of pixels 101 detects incident light during the same exposure period, and another group of the plurality of pixels 101 detects incident light during an exposure period different from this period. Such a driving method is also included in the global gate driving.

The micro-frame reading unit 323, the micro-frame addition unit 324, and the addition count control unit 325 are signal processing circuits that read a one-bit signal constituting a micro-frame from the imaging unit 321 and perform predetermined signal processing. The operations of these units will be described in detail below with reference to FIG. 9. The sub-frame output unit 326 is an interface that outputs a signal from the light receiving device 32 to the signal processing circuit 33 according to a predetermined standard. The sub-frame output unit 326 transmits a signal from the memory in the light receiving device 32 to the memory in the signal processing circuit 33. The functions of these units may be realized by the counter circuit 211, the selection circuit 212, and the gating circuit 216 in FIG. 5, the readout circuit 112 and the output circuit 114 in FIG. 4, etc.

The signal processing circuit 33 includes a sub-frame group storage unit 331 and a distance image generation unit 332. The signal processing circuit 33 is a computer including a processor that operates as the distance image generation unit 332, a memory that operates as the sub-frame group storage unit 331, etc. The operations of these units will also be described below with reference to FIG. 9.

Next, prior to describing the driving method of the present embodiment, configurations of a ranging frame, a sub-frame, and a micro-frame will be described with reference to FIG. 8. FIG. 8 schematically illustrates acquisition periods of a ranging frame corresponding to a distance image, a sub-frame used to generate the ranging frame, and a micro-frame used to generate the sub-frame by arranging blocks in a horizontal direction. The horizontal direction in FIG. 8 indicates the passage of time, and one block indicates an acquisition period of one ranging frame, sub-frame, or micro-frame.

The ranging frame F1 corresponds to one distance image. That is, the ranging frame F1 has information corresponding to a distance to an object X calculated from a time difference from emission of light to reception of the light for each of the plurality of pixels. In the present embodiment, it is assumed that a distance image is acquired as a moving image, and acquisition of one ranging frame F1 is repeatedly performed every time one ranging frame period T1 elapses.

One ranging frame F1 is generated from a plurality of sub-frames F2. One ranging frame period T1 includes a plurality of sub-frame periods T2. Every time one sub-frame period T2 elapses, one sub-frame F2 is repeatedly acquired. The sub-frame F2 is constituted by a multi-bit signal corresponding to an amount of light incident in the sub-frame period T2.

One sub-frame F2 is generated from a plurality of micro-frames F3. One sub-frame period T2 includes a plurality of micro-frame periods T3. Every time one micro-frame period T3 elapses, one micro-frame F3 is repeatedly acquired. The micro-frame F3 includes a one-bit signal indicating whether light incident on the photoelectric conversion element is present or absent during the micro-frame period T3. One sub-frame F2 of a multi-bit signal is generated by adding and combining a plurality of micro-frames of one-bit signals. As a result, one sub-frame F2 may include a multi-bit signal corresponding to the number of micro-frames in which incident light is detected within the sub-frame period T2.

In this manner, a plurality of sub-frames F2 that are different from each other in incident light acquisition period are acquired. This signal acquisition time can be associated with the distance from the distance image generation device to the ranging object. Then, the signal acquisition time at which the signal value is largest can be determined from a distribution of signal acquisition times and signal values of the plurality of sub-frames F2. Since it is estimated that reflected light is incident on the imaging unit 321 at the time when the signal value is largest, the distance can be calculated by converting the signal acquisition time when the signal value is largest into the distance to the object X. Furthermore, a distance image can be generated by calculating a distance for each pixel and acquiring a two-dimensional distribution of distances.

As illustrated in FIG. 8, the length of the ranging frame period T1 required to acquire one ranging frame F1 depends on the number of sub-frames F2. Since the number of sub-frames F2 is a parameter corresponding to the number of ranging points, there is a trade-off relationship between distance resolution and frame rate.

FIG. 9 illustrates a method of driving the distance image generation device in one ranging frame period T1. The driving method of the present embodiment will be described with reference to the flowchart of FIG. 9.

In the flowchart illustrated in FIG. 9, a process from "start" to "end" indicates a process performed during the ranging frame period T1 in which one ranging frame F1 is acquired of FIG. 8. One round of a process in a loop from step S11 to step S15 indicates a process performed during the sub-frame period T2 in which one sub-frame F2 is acquired of FIG. 8. One round of a process in a loop from step S11 to step S13 indicates a process performed in the micro-frame period T3 in which one micro-frame F3 is acquired of FIG. 8.

In step S11, the light source control unit 312 controls the pulsed light source 311 to emit pulsed light within a predetermined ranging area. In synchronization with this, the gate pulse generation unit 322 controls the imaging unit 321 to start detection of incident light by global gate driving.

In step S12, the micro-frame reading unit 323 reads a micro-frame from the imaging unit 321 every time the micro-frame period elapses. The read micro-frame is held in the memory of the micro-frame addition unit 324. This memory has a storage capacity capable of holding data of a plurality of bits for each pixel. Every time a micro-frame is read, the micro-frame addition unit 324 sequentially adds a value of the micro-frame to values held in the memory. As a result, the micro-frame addition unit 324 adds a plurality of micro-frames within the sub-frame period to generate a sub-frame. The number of times of addition in the micro-frame addition unit 324 is controlled by the addition count control unit 325. For this control, the addition count control unit 325 holds information on a preset number of times of addition. As described above, the micro-frame reading unit 323 functions as an acquisition unit that acquires a micro-frame configured by a one-bit signal based on light incident on the photoelectric conversion element. In addition, the micro-frame addition unit 324 functions as a combining unit that combines a plurality of micro-frames acquired during different periods. For example, when the number of times of addition is 64 times, a signal of a sub-frame having 6-bit gradation can be generated by combining 64 micro-frames.

In step S13, the micro-frame addition unit 324 determines whether the addition of micro-frames has been completed a preset number of times. When the addition of the set number of micro-frames has not been completed (NO in step S13), the process proceeds to step S11, and a next micro-frame is read. When the addition of the set number of micro-frames is completed (YES in step S13), the process proceeds to step S14.

In step S14, the sub-frame output unit 326 reads a sub-frame for which the addition has been completed from the memory of the micro-frame addition unit 324, and outputs the sub-frame to the sub-frame group storage unit 331. The sub-frame group storage unit 331 stores the sub-frame output from the sub-frame output unit 326. The sub-frame group storage unit 331 is configured to be able to individually store a plurality of sub-frames used for generating one ranging frame for each sub-frame period.

In step S15, the signal processing circuit 33 determines whether the sub-frame group storage unit 331 has completed acquisition of sub-frames corresponding to a predetermined number of sub-frames (that is, the number of ranging points). When the acquisition of sub-frames corresponding to the number of ranging points has not been completed (NO in step S15), the process proceeds to step S11, and a plurality of micro-frames are acquired and added again to read a next sub-frame. In this case, a similar process is performed by shifting (gate shifting) the start time of the global gate driving with respect to the light emission time as much as one sub-frame period. When the acquisition of sub-frames corresponding to the number of ranging points has been completed (YES in step S15), the process proceeds to step S16. Sub-frames corresponding to the number of ranging points are acquired by the loop from step S11 to step S15.

In step S16, the distance image generation unit 332 acquires a plurality of sub-frames in one ranging frame period from the sub-frame group storage unit 331. The distance image generation unit 332 calculates a distance corresponding to the sub-frame with the largest signal value for each pixel, thereby generating a distance image indicating a two-dimensional distribution of distances. Then, the distance image generation unit 332 outputs the distance image to a device outside the signal processing circuit 33. This distance image may be used, for example, to detect an environment around the vehicle. Note that the distance image generation unit 332 may store distance images in a memory inside the distance image generation device.

In the present embodiment, a plurality of pixels in the imaging unit 321 is divided into four pixel groups. Then, the pixel groups are different from each other in exposure period for reading a micro-frame (corresponding to step S11 in FIG. 9). Specific examples thereof will be described with reference to FIGS. 10A and 10B. FIG. 10A is a schematic diagram illustrating an arrangement of pixel groups in the pixel array according to the present embodiment, and FIG. 10B is a driving timing diagram illustrating timings of gate pulses according to the present embodiment.

The pixel array according to the present embodiment includes a first pixel group 327A ("A" in FIG. 10A), a second pixel group 327B ("B" in FIG. 10A), a third pixel group 327C ("C" in FIG. 10A), and a fourth pixel group 327D ("D" in FIG. 10A). As illustrated in FIG. 10A, the first pixel group 327A, the second pixel group 327B, the third pixel group 327C, and the fourth pixel group 327D form a two-dimensional repetitive array with four pixels as one block.

"Light emission" in FIG. 10B indicates a timing at which light is emitted by the pulsed light source 311. As illustrated in FIG. 10B, the pulsed light source 311 emits light at a constant cycle according to the control of the light source control unit 312. This cycle corresponds to a length of one micro-frame period in which micro-frames are acquired once. "P_{G_A}" to "P_{G_D}" in FIG. 10B indicate input timings of a plurality of types of gate pulses input from the gate pulse generation unit 322 to the imaging unit 321. "P_{G_A}", "P_{G_B}", "P_{G_C}", and "P_{G_D}" indicate different gate pulses for controlling the first pixel group 327A, the second pixel group 327B, the third pixel group 327C, and the fourth pixel group 327D, respectively. Gate pulses synchronized with the light emission timing L01 and corresponding to the first pixel group 327A, the second pixel group 327B, the third pixel group 327C, and the fourth pixel group 327D are gate pulses G01, G02, G03, and G04, respectively. The gate pulses G01, G02, G03, and G04 go to a high level after a predetermined time elapses from the light emission of the pulsed light source 311, but periods during which the gate pulses G01, G02, G03, and G04 go to the high level within one micro-frame period are different from each other. In other words, the gate pulses G01, G02, G03, and G04 go to the high level at times when a first time, a second time, a third time, and a fourth time different from each other have elapsed from the light emission of the pulsed light source 311. All the first time to the fourth time are shorter than the length of the micro-frame period.

In this manner, by differently setting the timings of the gate pulses G01, G02, G03, and G04, the exposure times of the first pixel group 327A, the second pixel group 327B, the third pixel group 327C, and the fourth pixel group 327D can be different. Therefore, four types of ranging points can be measured within one micro-frame period.

As described above, one sub-frame is generated by adding a plurality of micro-frames. That is, the first pixel group 327A, the second pixel group 327B, the third pixel group 327C, and the fourth pixel group 327D output signals for generating sub-frames at different ranging points. When one sub-frame is generated, the timing of the gate pulse at the start of the next sub-frame period for the first pixel group 327A is gate-shifted from the timing of the gate pulse in the current sub-frame period by a predetermined time interval. Furthermore, the gate shift is similarly performed for the second pixel group 327B, the third pixel group 327C, and the fourth pixel group 327D. By such a gate shift, a predetermined period corresponding to each sub-frame period can be set as an exposure period.

In this manner, by making the exposure time in each of the plurality of pixel groups different and performing the gate shift in each sub-frame period for each of the plurality of pixel groups, the number of times of gate shift required to measure a required number of ranging points is reduced. As a result, the total period of the plurality of sub-frames, that is, the length of the frame period (T1 in FIG. 8), is shortened. Therefore, the frame rate can be improved without reducing the number of ranging points (distance resolution). As described above, according to the present embodiment, the photoelectric conversion device in which the frame rate is improved while the appropriate distance resolution is ensured is provided.

In the present embodiment, the number of types of pixel groups is set to four, but the number of types of pixel groups may be at least two, and even if the number of types of pixel groups is other than four, the frame rate improving effect can be obtained. In addition, the number of photoelectric conversion elements included in one pixel group may be at least one. That is, for two photoelectric conversion elements (first photoelectric conversion element and second photoelectric conversion element), if a first exposure period of the first photoelectric conversion element and a second exposure period of the second photoelectric conversion element are different from each other in one micro-frame period, the above-described effect can be obtained. Furthermore, the arrangement of the pixel groups is not limited to that illustrated in FIG. 10A, and can be changed as appropriate.

Note that, in the present embodiment, although the frame rate improving effect can be obtained by arranging the plurality of pixel groups, the in-plane resolution of the ranging image may be reduced. Therefore, a method of reducing the influence on the in-plane resolution by complementing pixels with missing information in the ranging image with surrounding pixels may be further applied.

### [Second Embodiment]

In the present embodiment, another example will be described for the arrangement of the pixel groups and the timings of the gate pulses described in the first embodiment. The description of elements common to the first embodiment may be omitted or simplified as appropriate.

FIG. 11A is a schematic diagram illustrating an arrangement of pixel groups in the pixel array according to the present embodiment, and FIG. 11B is a driving timing diagram illustrating timings of gate pulses according to the present embodiment.

The pixel array according to the present embodiment includes a first pixel group 328A ("A" in FIG. 11A), a second pixel group 328B ("B" in FIG. 11A), a third pixel group 328C ("C" in FIG. 11A), and a fourth pixel group 328D ("D" in FIG. 11A). The first pixel group 328A and the second pixel group 328B (first photoelectric conversion elements) are configured to have sensitivity to light having a first wavelength. The third pixel group 328C and the fourth pixel group 328D (second photoelectric conversion elements) are configured to have sensitivity to light having a second wavelength different from the first wavelength. More specifically, a first color filter that transmits light having the first wavelength is disposed in the first pixel group 328A and the second pixel group 328B, and a second color filter that transmits light having the second wavelength is disposed in the third pixel group 328C and the fourth pixel group 328D. The ranges of the first wavelength and the second wavelength in the present embodiment may both be, for example, in the infrared region.

The pulsed light source 311 of the present embodiment is configured to be able to emit light having the first wavelength and light having the second wavelength individually at different cycles. "Light emission (first wavelength)" in FIG. 11B indicates a timing at which light having the first wavelength is emitted by the pulsed light source 311. "Light emission (second wavelength)" in FIG. 11B indicates a timing at which light having the second wavelength is emitted by the pulsed light source 311. As illustrated in FIG. 11B, the light having the first wavelength and the light having the second wavelength are different from each other in length of light emission cycle. In the example of FIG. 11B, the length of the light emission cycle of the light having the second wavelength is twice the length of the light emission cycle of the light having the first wavelength.

For the first pixel group 328A and the second pixel group 328B, gate pulses G05 and G06 are input at timings synchronized with the light emission timing L02 of the light having the first wavelength. For the third pixel group 328C and the fourth pixel group 328D, gate pulses G07 and G08 are input at timings delayed from the light emission timing L03 of the light having the second wavelength by a time corresponding to one cycle of emission of light having the first wavelength. Therefore, the micro-frame acquisition cycle for the first pixel group 328A and the second pixel group 328B is different from the micro-frame acquisition cycle for the third pixel group 328C and the fourth pixel group 328D. With such settings, the first pixel group 328A and the second pixel group 328B are used as pixel groups for measuring short distances (first distance range), and the third pixel group 328C and the fourth pixel group 328D are used as pixel groups for measuring long distances (second distance range). As a result, a plurality of different ranging areas can be measured within the same sub-frame period. In addition, in general, in a method of repeatedly acquiring and adding micro-frames each including a one-bit signal, a ranging area is limited by a cycle at which a light emission pulse is repeated, but in the method of the present embodiment, signals at both a short distance and a long distance can be acquired, making it possible to measure distances over a wide range.

As described above, according to the present embodiment, the same effects as those of the first embodiment can be obtained, and there is provided a photoelectric conversion device capable of simultaneously acquiring a plurality of different ranging areas without lowering the frame rate.

Note that, in the present embodiment, a bit depth of a signal of a sub-frame obtained from the pixel group for short distance ranging may be different from a bit depth of a signal of a sub-frame obtained from the pixel group for long distance ranging. In a case where the number of times of addition of signals for short distance ranging is 64 times, a sub-frame for short distance with a 6-bit depth is obtained. In this case, since the number of times of emission of the light having the second wavelength is half the number of times of emission of the light having the first wavelength, the number of times of addition of signals for long distance ranging is 32 times at the maximum. Therefore, a sub-frame for long distance has a 5-bit depth. In this manner, in a case where bit depths of two signals are different, the bit depths may be adjusted.

In the present embodiment, the number of types of wavelengths of light emitted by the pulsed light source 311 is two, but may be three or more. Furthermore, the ratio of cycles of light having different wavelengths is not limited to twice, and can be appropriately set.

### [Third Embodiment]

In the present embodiment, still another example will be described for the arrangement of the pixel groups and the timings of the gate pulses described in the first embodiment and the second embodiment. The description of elements common to the first embodiment or the second embodiment may be omitted or simplified as appropriate.

FIG. 12A is a schematic diagram illustrating an arrangement of pixel groups in the pixel array according to the present embodiment, and FIG. 12B is a driving timing diagram illustrating timings of gate pulses according to the present embodiment.

The pixel array according to the present embodiment includes a first pixel group 329R ("R" in FIG. 12A), a second pixel group 329G ("G" in FIG. 12A), a third pixel group 329B ("B" in FIG. 12A), and a fourth pixel group 329Z ("Z" in FIG. 12A). The first pixel group 329R, the second pixel group 329G, the third pixel group 329B, and the fourth pixel group 329Z are configured to have sensitivity to light having different wavelengths. More specifically, a first color filter that transmits red light having a wavelength of 700 nm (first wavelength) is disposed in the first pixel group 329R (first photoelectric conversion elements). A second color filter that transmits green light having a wavelength of 550 nm (third wavelength) is disposed in the second pixel group 329G (third photoelectric conversion elements). A third color filter that transmits blue light having a wavelength of 430 nm (fourth wavelength) is disposed in the third pixel group 329B (fourth photoelectric conversion elements). A fourth color filter that transmits light having an infrared wavelength of 1000 nm (second wavelength) is disposed in the fourth pixel group 329Z (second photoelectric conversion elements).

The pulsed light source 311 of the present embodiment is configured to be able to emit light having an infrared wavelength. "Light emission (infrared wavelength)" in FIG. 12B indicates a timing at which light having the infrared wavelength is emitted by the pulsed light source 311. "P_{G_Z}" indicates a gate pulse for controlling the fourth pixel group 329Z. "P_{G_RGB}" indicates a gate pulse for commonly controlling the first pixel group 329R, the second pixel group 329G, and the third pixel group 329B.

For the fourth pixel group 329Z, a gate pulse G09 is input at a timing synchronized with the light emission timing L04 of the light having the infrared wavelength. For the first pixel group 329R, the second pixel group 329G, and the third pixel group 329B, a gate pulse G10 is input over a predetermined exposure period in which imaging is performed.

As a result, signals including information of red, green, and blue colors are obtained in the first pixel group 329R, the second pixel group 329G, and the third pixel group 329B, so that a color image can be generated using these signals. Note that the three colors of red, green, and blue are exemplary, and a color image can be generated as long as the acquired signals include information of a plurality of colors in the visible region. Furthermore, similarly to the first embodiment and the second embodiment, distance information is obtained in the fourth pixel group 329Z by inputting the gate pulse G09 at a timing synchronized with light emission.

In this manner, according to the configuration of the present embodiment, ranging signals and color image generation signals can be acquired within the same sub-frame period. Therefore, a photoelectric conversion device capable of acquiring a color image and a distance image while maintaining a distance resolution and a frame rate is provided.

### [Fourth Embodiment]

In the present embodiment, an example of a configuration capable of further inputting a recharge pulse for resetting the photoelectric conversion element to the pixel circuit in the configuration of the third embodiment will be described. The description of elements common to the first to third embodiments may be omitted or simplified as appropriate.

FIG. 13 is a schematic block diagram of a pixel according to the present embodiment. In FIG. 13, a transistor 217 is disposed as a specific example of the quenching element 202 in FIG. 5. The transistor 217 is an NMOS transistor. A source of the transistor 217 is connected to a connection node between the APD 201 and the input terminal of the waveform shaping unit 210. The voltage VH is supplied to a drain of the transistor 217. A recharge pulse is input from the vertical scanning circuit 110 to a gate of the transistor 217 via a driving line 218. When a high-level recharge pulse is input to the transistor 217, the transistor 217 is turned on, the cathode potential of the APD 201 is reset to a potential at which avalanche multiplication is possible. This operation is called a recharging operation.

FIG. 14 is a driving timing diagram illustrating timings of gate pulses and recharge pulses according to the present embodiment. The configuration of the pixel groups in the pixel array of the present embodiment is similar to that of the third embodiment. Similarly to the third embodiment, the pulsed light source 311 of the present embodiment is also configured to be able to emit light having an infrared wavelength. "P_{R_Z}" indicates a recharge pulse for controlling the fourth pixel group 329Z. "P_{R_RGB}" indicates a recharge pulse for commonly controlling the first pixel group 329R, the second pixel group 329G, and the third pixel group 329B.

A recharge pulse synchronized with the light emission timing L05 and corresponding to the fourth pixel group 329Z is a recharge pulse R01. A recharge pulse synchronized with the light emission timing L05 and corresponding to the first pixel group 329R, the second pixel group 329G, and the third pixel group 329B is a recharge pulse R02. The recharge pulses R01 and R02 go to a high level after a predetermined time elapses from the light emission of the pulsed light source 311, but periods during which the recharge pulses R01 and R02 go to the high level within one micro-frame period are different from each other.

After the recharge pulse R01 falls, a gate pulse G11 corresponding to the fourth pixel group 329Z goes to a high level. Furthermore, after the recharge pulse R02 falls, a gate pulse G12 corresponding to the first pixel group 329R, the second pixel group 329G, and the third pixel group 329B goes to a high level.

In the first pixel group 329R, the second pixel group 329G, and the third pixel group 329B, a period from the fall of the recharge pulse R02 to the fall of the gate pulse G12 is a photon detection period for capturing a color image. That is, in the configuration of the present embodiment, a charge accumulation time in capturing a color image can be controlled by appropriately setting the timings of the recharge pulse R02 and the gate pulse G12. In the configuration of the third embodiment, since the gate pulse G10 for capturing a color image is maintained at the high level, in a case where the object is a moving object, image blurring, mixing of signals from different objects, or the like may occur. However, in the configuration of the present embodiment, the influence of such factors can be reduced by appropriately setting the charge accumulation time in capturing a color image. Therefore, according to the present embodiment, the same effects as those of the third embodiment can be obtained, and the image quality can be further improved.

### [Fifth Embodiment]

In the present embodiment, an example of a configuration capable of further generating an external light map from micro-frames of a plurality of pixel groups in the configurations of the first to fourth embodiments will be described. The description of elements common to the first to fourth embodiments may be omitted or simplified as appropriate.

FIG. 15 is a functional block diagram illustrating a schematic configuration example of a ranging device according to the present embodiment. In FIG. 15, in addition to the configuration of FIG. 7, a flag calculation unit 327 is further disposed in the light receiving device 32, and a map generation unit 333 is further disposed in the signal processing circuit 33. The other configurations are similar to those of any one of the first to fourth embodiments. Hereinafter, the operations of the flag calculation unit 327 and the map generation unit 333 of the present embodiment will be described on the premise of the configuration of the first embodiment.

The flag calculation unit 327 performs a logical operation such as a logical product on one-bit signals for micro-frame output from the plurality of pixel groups, and outputs a result as an external light flag. The external light flag is a one-bit signal indicating whether ambient light (external light) emitted from what is other than the light emitting device 31 is present or absent. For example, the flag calculation unit 327 calculates a logical product of four one-bit signals output from the first pixel group 327A, the second pixel group 327B, the third pixel group 327C, and the fourth pixel group 327D, respectively. In this case, when all the logical values of the four one-bit signals are "1", a logical value of a calculation result is "1". The pixel groups to be added may be selected from a plurality of pixels adjacent to each other, such as four pixels denoted by reference signs in FIG. 10A.

The flag calculation unit 327 generates a plurality of external light flags by performing similar logical operation processing on a plurality of regions selected from the entire pixel array, respectively. The map generation unit 333 acquires the plurality of external light flags generated by the flag calculation unit 327, generates an external light map in which logical values of the external light flags are associated with positions in the pixel array, and outputs the external light map to the outside.

FIG. 16 is a schematic diagram illustrating an example of an external light map according to the present embodiment. FIG. 16 illustrates an image captured by the photoelectric conversion device mounted on the vehicle, in which boxes with "1" are superimposed and displayed only in regions where the logical values of the external light flags are "1". As illustrated in FIG. 16, the logical value of the external light flag is "1" in a blue sky region where luminance is generally high due to the influence of sunlight.

In general, in a method of measuring a distance by emitting light from a light source and detecting light reflected by an object, external light such as sunlight existing independently of the light from the light source may affect accuracy. For example, external light that is not reflected light from an object may produce a false signal indicating the object.

Many detection values based on external light depend on position. For example, a region that receives external light from the blue sky as illustrated in FIG. 16 spreads over a wide range in the upper portion of the image. **In** the present embodiment, an external light flag is calculated by a logical operation on one-bit signals output from a plurality of pixels, making it possible to detect pixels on which external light having a certain tendency as described above is highly likely to be incident. By generating an external light map using the external light flag, information indicating a region where external light is highly likely to be incident can be output to the outside. The external light map can be used for image processing at the subsequent stage. For example, in a case where processing of recognizing an object in an image is performed, by excluding a region having a logical value of "1" in the external light map from the processing, it is not necessary to spend processing resources in the region with lower accuracy due to external light, thereby speeding up the processing. This object recognition is applicable to, for example, automatic driving.

In this manner, according to the present embodiment, a photoelectric conversion device capable of outputting information indicating a degree of accuracy of a signal to the outside is provided.

Note that, in the present embodiment, the logical product is used as an example of the logical operation performed in the flag calculation unit 327, but the present invention is not limited thereto, and any processing may be used as long as a value is output based on signals from a plurality of pixels. For example, the logical operation may be a logical sum.

### [Sixth Embodiment]

FIGS. 17A and 17B are block diagrams of equipment relating to an in-vehicle ranging device according to the present embodiment. Equipment 80 includes a distance measurement unit 803, which is an example of the distance image generation device of the above-described embodiments, and a signal processing device (processing device) that processes a signal from the distance measurement unit 803. The equipment 80 includes the distance measurement unit 803 that measures a distance to an object, and a collision determination unit 804 that determines whether or not there is a possibility of collision based on the measured distance. The distance measurement unit 803 is an example of a distance information acquisition unit that obtains distance information to the object. That is, the distance information is information on a distance to the object or the like. The collision determination unit 804 may determine the collision possibility using the distance information.

The equipment 80 is connected to a vehicle information acquisition device 810, and can obtain vehicle information such as a vehicle speed, a yaw rate, and a steering angle. Further, the equipment 80 is connected to a control ECU 820 which is a control device that outputs a control signal for generating a braking force to the vehicle based on the determination result of the collision determination unit 804. The equipment 80 is also connected to an alert device 830 that issues an alert to the driver based on the determination result of the collision determination unit 804. For example, when the collision possibility is high as the determination result of the collision determination unit 804, the control ECU 820 performs vehicle control to avoid collision or reduce damage by braking, returning an accelerator, suppressing engine output, or the like. The alert device 830 alerts the user by sounding an alarm, displaying alert information on a screen of a car navigation system or the like, or giving vibration to a seat belt or a steering wheel. These devices of the equipment 80 function as a movable body control unit that controls the operation of controlling the vehicle as described above.

In the present embodiment, ranging is performed in an area around the vehicle, for example, a front area or a rear area, by the equipment 80. FIG. 17B illustrates equipment when ranging is performed in the front area of the vehicle (ranging area 850). The vehicle information acquisition device 810 as a ranging control unit sends an instruction to the equipment 80 or the distance measurement unit 803 to perform the ranging operation. With such a configuration, the accuracy of distance measurement can be further improved.

Although the example of control for avoiding a collision to another vehicle has been described above, the embodiment is applicable to automatic driving control for following another vehicle, automatic driving control for not going out of a traffic lane, or the like. Furthermore, the equipment is not limited to a vehicle such as an automobile and can be applied to a movable body (movable apparatus) such as a ship, an airplane, a satellite, an industrial robot and a consumer use robot, or the like, for example. In addition, the equipment can be widely applied to equipment which utilizes object recognition or biometric authentication, such as an intelligent transportation system (ITS), a surveillance system, or the like without being limited to movable bodies.

### [Modified Embodiments]

The present invention is not limited to the above embodiments, and various modifications are possible. For example, an example in which some of the configurations of any one of the embodiments are added to other embodiments and an example in which some of the configurations of any one of the embodiments are replaced with some of the configurations of other embodiments are also embodiments of the present invention.

The disclosure of this specification includes a complementary set of the concepts described in this specification. That is, for example, if a description of "A is B" (A = B) is provided in this specification, this specification is intended to disclose or suggest that "A is not B" even if a description of "A is not B" (A ≠ B) is omitted. This is because it is assumed that "A is not B" is considered when "A is B" is described.

The present invention can also be realized by processing in which a program for realizing one or more functions of the above-described embodiments is supplied to a system or a device via a network or a storage medium, and one or more processors in a computer of the system or the device read and execute the program. The present invention can also be realized by a circuit (e.g., ASIC) that realizes one or more functions.

Note that the above-described embodiments are merely specific examples in implementing the present invention, and the technical scope of the present invention should not be construed in a limited manner by these embodiments. That is, the present invention is not limited to the above-described embodiments, and various changes and modifications can be made without departing from the spirit and scope of the present invention. Therefore, the following claims are attached in order to make the scope of the present invention public.

The present application claims priority based on Japanese Patent Application No. 2022-142845 filed on September 8, 2022, the entire contents of which are incorporated herein by reference.

### [Reference Signs List]

321 Imaging unit
322 Gate pulse generation unit
323 Micro-frame reading unit
324 Micro-frame addition unit

## Claims

1. A photoelectric conversion device comprising:
a plurality of photoelectric conversion elements;
an acquisition unit configured to acquire a micro-frame constituted by a one-bit signal based on light incident on each of the plurality of photoelectric conversion elements; and
a combining unit configured to combine a plurality of the micro-frames to generate a sub-frame constituted by a multi-bit signal,
wherein the plurality of photoelectric conversion elements include a first photoelectric conversion element and a second photoelectric conversion element, and
wherein during a period in which one micro-frame is acquired, a first exposure period in which the one-bit signal is generated based on the light incident on the first photoelectric conversion element is different from a second exposure period in which the one-bit signal is generated based on the light incident on the second photoelectric conversion element.

2. The photoelectric conversion device according to claim 1,
wherein the first photoelectric conversion element is sensitive to light having a first wavelength, and
wherein the second photoelectric conversion element is sensitive to light having a second wavelength different from the first wavelength.

3. The photoelectric conversion device according to claim 2, wherein a cycle at which the micro-frame is acquired based on the light incident on the first photoelectric conversion element is different from a cycle at which the micro-frame is acquired based on the light incident on the second photoelectric conversion element.

4. The photoelectric conversion device according to claim 2 or 3,
wherein the signal based on the light incident on the first photoelectric conversion element is used for ranging in a first distance range, and
wherein the signal based on the light incident on the second photoelectric conversion element is used for ranging in a second distance range different from the first distance range.

5. The photoelectric conversion device according to claim 2,
wherein the signal based on the light incident on the first photoelectric conversion element is used for generating an image, and
wherein the signal based on the light incident on the second photoelectric conversion element is used for ranging.

6. The photoelectric conversion device according to claim 5,
wherein the plurality of photoelectric conversion elements further include a third photoelectric conversion element and a fourth photoelectric conversion element, and
wherein the third photoelectric conversion element is sensitive to light having a third wavelength different from both the first wavelength and the second wavelength, and
wherein the fourth photoelectric conversion element is sensitive to light having a fourth wavelength different from all of the first wavelength, the second wavelength, and the third wavelength.

7. The photoelectric conversion device according to claim 6, wherein the signals based on the light incident on the first photoelectric conversion element, the third photoelectric conversion element, and the fourth photoelectric conversion element are used for generating a color image.

8. The photoelectric conversion device according to any one of claims 5 to 7,
wherein the first wavelength is a wavelength in a visible region, and
wherein the second wavelength is a wavelength in an infrared region.

9. The photoelectric conversion device according to any one of claims 1 to 8, wherein during the period in which one micro-frame is acquired, a time at which the first photoelectric conversion element is reset is different from a time at which the second photoelectric conversion element is reset.

10. The photoelectric conversion device according to any one of claims 1 to 9, further comprising a calculation unit configured to generate a signal by a logical operation based on the one-bit signal based on the light incident on the first photoelectric conversion element and the one-bit signal based on the light incident on the second photoelectric conversion element.

11. The photoelectric conversion device according to claim 10, wherein the signal output by the calculation unit indicates whether ambient light is present or absent.

12. The photoelectric conversion device according to claim 10 or 11, wherein the logical operation is a logical product of the one-bit signal based on the light incident on the first photoelectric conversion element and the one-bit signal based on the light incident on the second photoelectric conversion element.

13. The photoelectric conversion device according to any one of claims 1 to 12,
wherein the first exposure period starts at a time when a first time has elapsed from a light emission timing of a light source configured to emit light to a ranging object, and
wherein the second exposure period starts at a time when a second time different from the first time has elapsed from the light emission timing.

14. The photoelectric conversion device according to any one of claims 1 to 13,
wherein the photoelectric conversion element includes an avalanche photodiode, and
wherein the one-bit signal indicates whether a photon is incident on the avalanche photodiode within a period in which the micro-frame is acquired.

15. The photoelectric conversion device according to any one of claims 1 to 14, wherein the combining unit generates the multi-bit signal by adding a value of the one-bit signal every time the micro-frame is acquired.

16. A distance image generation device comprising:
the photoelectric conversion device according to any one of claims 1 to 15; and
a distance image generation unit configured to generate a distance image based on a signal generated by the photoelectric conversion device.

17. A movable body comprising:
the photoelectric conversion device according to any one of claims 1 to 15; and
a movable body control unit configured to control the movable body based on distance information acquired by the photoelectric conversion device.
